# EUROPEAN PATENT APPLICATION

(11) **EP 1 550 840 A1**
(43) Date of publication of application: **06.07.2005**
(21) Application number: 03753242.1
(22) Date of filing: 08.10.2003
(51) Int. Cl.: G01C 21/00, G01S 13/02

(54) **DEVICE AND METHOD FOR DETECTING CURRENT POSITION OF A MOVING VEHICLE**

(30) Priority: 08.10.2002 CN 02137319
(71) Applicant: Qu, Shengbo, Shanghai 200125 (CN)
(72) Inventor: Qu, Shengbo, Shanghai 200125 (CN)
(74) Representative: Becker Kurig Straus
(86) International application number: PCT/CN2003/000844
(87) International publication number: WO 2004/033993

(57) **Abstract**

The present invention relates to a vehicle position detector device that obtains the vehicle position information at lower cost and a method of confirming the moving vehicle current position. The vehicle position detector device measures respectively the velocity of both side wheels by use of the velocity sensitive elements mounted on both sides of the vehicle, and obtains the variation in the moving direction by calculation, the problem, in which the GPS may no longer work normally when the vehicle enters into tunnel, goes under elevated highway or into urban center ways that are surrounded by high buildings, could be resolved without the inertia navigation element. The method could eliminate the invalid data caused by the blocked or interfered GPS signal, and eliminate the accumulated error of the calculation result when calculating the position according to the velocity and direction, and continuously obtain the correct and effective vehicle position information.

## Description

### FIELD OF THE INVENTION

The present invention relates to a detector device for confirming the moving vehicle position and method for obtaining the vehicle position information.

### BACKGROUND OF THE INVENTION

The Global Position System (GPS) which are widely used at present for the navigating and positioning of aviation, space flight, voyage and ground carrier may provide the positioning and navigating of all weather and continuous three dimension in all the world. However, in case of vehicle entering into tunnel, going under elevated highway or into urban center ways that are surrounded by high buildings, the GPS may no longer works normally for reasons of GPS receiver antenna being blocked or the signal being interfered. For resolving this problem, a method of calculating current position to compensate GPS signal missing by azimuth sensor and velocity sensor is proposed in the Chinese Invention Patent ZL97110539.1. The most used azimuth sensor in navigation system at present is the Inertia Navigation System (INS), such as gyroscope, in which the carrier angular velocity and acceleration measured by inertia measuring unit (IMU) are calculated and exchanged to obtain navigation information. The core unit of the Inertia Navigation System is a fast running gyro that has not only a poor anti-vibration performance but also a high manufacture cost. Therefore, the Inertia Navigation System is mainly applied in large carrier means such as the carrier rocket, airplane and ship etc and some super cars at present, hardly popularized in civil cars.

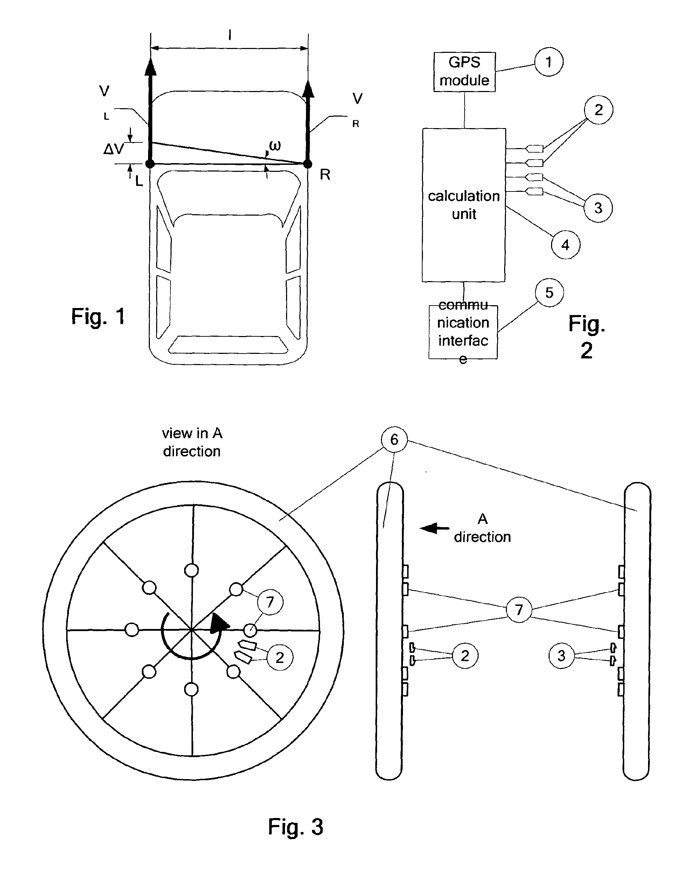

According to physical principle, a car moving on ground may be seen as a plane moving rigid body. Refer to Fig.1, taking the wheel center points L and R at two vehicle sides as reference points, on any a moment, the vehicle movement may be broken up as a composition of parallel movement along the reference point R and a turning movement around the reference point R. The turning line velocity of reference point L relative to reference point R on vehicle equals about the two sides velocity difference ΔV=V_{L}-V_{R}, the angular velocity of reference point L turning around reference point R is ω≈ΔV/1, in which, 1 is the distance between point L and point R, that is the spacing between left and right wheels of the vehicle. In this way, the vehicle moving track may be calculated by the kinematics rule only if the vehicle position and direction at preceding moment have been known and the moving velocities V_{L} and V_{R} of points L and R have been measured.

### CONTENTS OF THE INVENTION

The present invention provides a vehicle position detector device that obtains the vehicle position information at lower cost and a method in which the moving vehicle current position could be confirmed in case of GPS signal being interfered or missed.

The vehicle position detector device provided by the present invention comprises:
A GPS module for receiving and processing the GPS satellite signal, used to receive the satellite position information:
   Two groups of velocity sensor elements, for sensing the moving velocity of left and right side wheels or other moving mechanism of the vehicle;
   A calculation unit, for calculating the moving velocity, direction and position coordinate of the vehicle, comparing the GPS position information with calculation results, eliminating the invalid data and providing the correct and effective vehicle position information;
   A communication interface, for transmitting the vehicle position information processed by calculation unit to the position information display device or vehicle navigation system.

The method of confirming the moving vehicle current position according to the present invention is realized through the following steps:
1. Sensing respectively the moving velocity of both side wheels or other moving mechanism by the velocity sensor elements mounted on the left and right side of the vehicle, and calculating the vehicle moving velocity and the azimuth angle variation in moving direction according to the velocity measured by the velocity sensor;
2. Taking the vehicle position coordinate and azimuth at the preceding moment as the reference position information to calculate the vehicle current position coordinate and azimuth with the calculation result of step 1;
3. Receiving the GPS position information, comparing the position data obtained from the GPS measurement with the calculation result of step 2, eliminating the invalid data caused by the blocked or interfered GPS signal, eliminating the accumulated error of the calculation result of step 2, thereby obtaining the correct and effective vehicle position information.

### BRIEF DESCIPTION OF THE APPENDED DRAWINGS

Fig.1 is a principle sketch map of the present invention.
Fig.2 is a circuit block diagram showing an embodiment of the vehicle position detector device according to the present invention.
Fig.3 is a sketch map showing the sensor layout of the vehicle position detector device according to the present invention.
Fig.4 is a processing flowchart showing the obtaining method of the vehicle position information according to the present invention.
Fig.5 is a sketch map showing the vehicle moving track.

### DESCRIPTION OF THE EMBODIMENTS

The embodiment according to the present invention will be described with reference to the drawings.

An embodiment of the vehicle position detector device according to the present invention comprises the following parts, refer to Fig.2:

A GPS module 1 for receiving and processing the GPS satellite signal, used to receive and provide the satellite position information. The GPS module 1 may be an universal GPS position module, e.g. the series GPS 15 or GPS 25 from GARMIN Co.

A left side velocity sensor element 2 and a right side velocity sensor element 3, they are mounted on the vehicle left and right side respectively, for sensing the moving velocity of the left and right wheels or other moving mechanism of the vehicle. The velocity sensor element 2 and 3 may be an universal velocity sensor element, such as electromagnet coil, photoelectric sensor or some magnetic sensor element. The simplest sensor element may be a reed tube, and the even reliable sensor element may be a Hall element or contactless sensor element such as magnetic-sensitive resistor.

Calculation unit 4, for calculating the vehicle moving velocity, direction and position coordinate, comparing the GPS position information with calculation results, eliminating the invalid data and providing the correct and effective vehicle position information. The calculation unit 4 may be an universal single chip microprocessor, such as the 89C51 or 89C52 chip of series MCS-51. The GPS module 1 is connected to the data receiving input terminal RXD of serial communication interface of the calculation unit 4. The velocity sensor element 2 and 3 are connected to the input ports of the calculation unit 4, e.g. some input terminals in the P3 port or P1 port of series MCS-51.

Communication interface 5, for transmitting the vehicle position information processed by calculation unit to the position information display device or vehicle navigation system. The communication interface 5 may employ the data transmission output terminal TXD of serial communication interface of the calculation unit 4. For convenience of the computer connection with the vehicle navigation system, the RS232 standard may be adopted for the serial communication port, and the universal MAX232 level changeover chip may be employed to realize the level changeover.

Each group of velocity sensor element 2 or 3 in the vehicle position detector device according to present invention comprises at lest a sensitive element fixed onto the vehicle and an inductive point element fixed onto the wheel. Fig.3 is an illustration showing a concrete layout of the velocity sensor element according to the present invention. The inductive point element 7 in this layout is a permanent magnet that is fixed onto the wheel inner side and opposite to the sensitive element, eight inductive point elements are evenly mounted on the inner side of left and right wheel 6, and on the circle of the position relative to the magnetic sensitive element 2 or 3. According to the embodiment, each velocity sensor element could obtain eight count pulses whenever the wheel turning a circle, and the measurement precision is heightened without increasing cost.

According to the embodiment, each sensitive element 2 and 3 comprises two sensitive elements that are fixed onto the vehicle two sides, nearby the left and right wheel 6 and opposite to the inductive point element 7. The wheel turning direction could be judged by sensing the phase difference between the count pulses produced by two sensitive elements in the same group. Owing to the fact that the wheels on both vehicle sides are normally turning in the same direction, in an even simpler embodiment, two sensitive elements are configured in only one side of the sensitive element 2 or 3.

The calculation unit 4 of the vehicle position detector device according to the present invention may also be combined into the GPS module 1, co-uses a same calculation unit with the GPS satellite signal processing unit, and a modularized vehicle position detector device is thus formed.

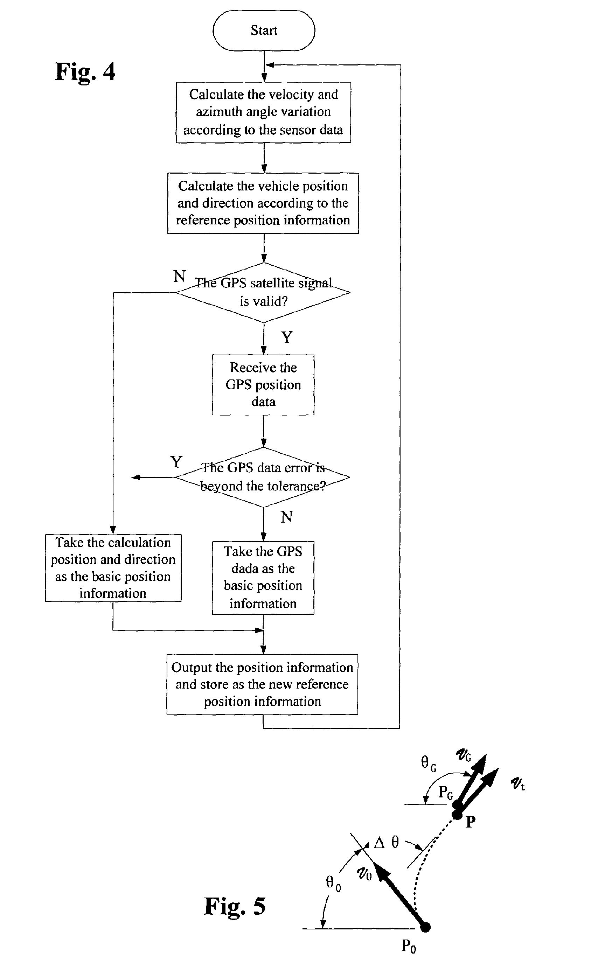

The method of confirming the moving vehicle current position according to the present invention comprises the concrete steps shown in Fig.4, the vehicle position method according to the present invention will be described in details with reference to the Fig.1, Fig.4 and Fig.5:
1. Sensing respectively the moving velocity V_{L} and V_{R} of both side wheels of the vehicle by use of the velocity sensitive element 2 and 3 mounted on the left and right side of the vehicle, calculating the average velocity Vₜ=(V_{L}+V_{R})/2 of the vehicle t moment, calculating the variational angular velocity ω of azimuth angle in the moving direction;
2. Taking the geography coordinate and azimuth angle θ₀ at vehicle t₀ moment and P₀ position as the reference position information, by use of the integration of average velocity V and angular velocity ω relative to time, calculating the geography coordinate P at vehicle t moment, azimuth angle variation Δθ= ∫ωdt, and calculating the azimuth angle θ=θ_{A}+Δθ in the moving direction when the vehicle approaching the position P;
3. Receiving the navigation satellite signal by use of the GPS module 1, if the GPS satellite signal is valid, employ the GPS position data to obtain the geography coordinate, azimuth angle θ_{G} in the moving direction and vehicle moving velocity V_{G} at vehicle t moment and P_{G} position;
4. Comparing the vehicle moving velocity V_{G} obtained by the GPS module with the average velocity Vₜ actually measured in step 1, if the error is no more than the tolerance, take the satellite position data P_{G}, θ_{G} and the actual measured average velocity Vₜ as the basic position information at vehicle t moment, and eliminate the accumulated error of the calculation result in step 2;
5. If the V_{G} and Vₜ comparison error is beyond the tolerance, it could be judged that the GPS is being interfered, and the received data is an invalid data, or, if the GPS module 1 could not receive the valid satellite signal, the data P and θ calculated in step 2 and the actual measured average velocity Vₜ may be taken as the basic position information at vehicle t moment, and eliminate the invalid data caused by the blocked or interfered GPS signal;
6. The basic position information obtained in step 4 or step 5 is transmitted via the communication interface to the position information display device or the vehicle navigation system, and stored as the new reference position information at the same time;
7. Repeating the process of step 1 to step 6 to eliminate the invalid data caused by the blocked or interfered GPS signal, eliminate the accumulated error in the calculation result when calculating the position according to velocity and direction, and the reliable and effective vehicle position information may be obtained continuously.

It can be seen from the above, the vehicle position detector device and method according to the present invention replace the complicated and expensive inertia measurement device with the low cost and high reliability velocity sensor element, it could compensate the drawback of GPS signal of being apt to be interfered in pure GPS vehicle navigation system with lowest cost, it could measure the moving vehicle position with precision when the GPS signal is interfered or missed. In the ABS technology which is widely employed in the new vehicle braking system at present and in which the braking process is controlled by the wheel velocity, each wheel must be equipped with a velocity sensor element to measure the wheel velocity, thus, if the vehicle position detector device according to the present invention and ABS braking system co-use a same velocity sensor element, the present invention technology could be realized without increasing any cost, and the merit of the present invention could be even more obviously and highly lighted.

## Claims

1. A vehicle position detector device, comprises:
A GPS module for receiving and processing the GPS satellite signal, used to receive the satellite position information;
Two groups of velocity sensitive elements, for sensing the moving velocity of the left and right side wheels or other moving mechanism of the vehicle;
A calculation unit, for calculating the vehicle moving velocity, direction and position coordinate, comparing the GPS position information with the calculation results, eliminating the invalid data, and providing the correct and effective vehicle position information;
A communication interface, for transmitting the vehicle position information processed by the calculation unit to the position information display device or the vehicle navigation system.

2. The vehicle position detector device according to Claim 1, **characterized in that** each group of the said velocity sensitive elements comprises two or more inductive point elements for increasing the measurement precision.

3. The vehicle position detector device according to Claim 1, **characterized in that** at least one group in the said two groups of velocity sensitive elements comprises two sensitive elements for judging the wheel turning direction.

4. The vehicle position detector device according to Claim 2, **characterized in that** at least one group in the said velocity sensitive elements comprises two sensitive elements for judging the wheel turning direction.

5. The vehicle position detector device according to one of Claims 1 to 4, **characterized in that** the said calculation unit is combined into the GPS module, and a modularized vehicle position detector device is thus formed.

6. A method of confirming the moving vehicle current position, comprising the following steps:
Sensing the velocity of both sides of the vehicle; calculating the vehicle moving velocity and the azimuth angle variation in the moving direction; calculating the current vehicle position coordinate and azimuth; comparing the position data obtained from GPS measurement with the calculation result, eliminating the invalid data caused by the blocked or interfered GPS signal and the accumulated error of the calculation result to obtain the correct and effective vehicle position information.
